# EUROPEAN PATENT APPLICATION

(11) **EP 3 926 001 A1**
(43) Date of publication of application: **22.12.2021**
(21) Application number: 20179877.4
(22) Date of filing: 15.06.2020
(51) Int. Cl.: C08J 9/00, C08K 5/00

(54) **HALOGEN-FREE, FLAME-RETARDANT FOAMED THERMOPLASTIC POLYMER**

(71) Applicant: swisspor Management AG, 6312 Steinhausen (CH)
(72) Inventor: LORENZI, Micaela, 20900 Monza (IT)
(74) Representative: Koelliker, Robert

(57) **Abstract**

The present invention relates to halogen-free, flame-retardant foamed thermoplastic polymer (1*) comprising a thermoplastic polymer (1) and a halogen-free flame retardant (23), wherein the flame retardant (23) comprises
i) DOPO and/or a derivate thereof (2), having the general formula (I) 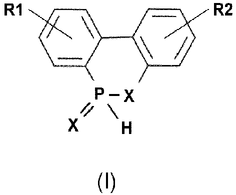 and
ii) an organic compound (3) comprising one or more reactive groups (3a) and one or more hydrophobic groups (3b), and/or
iii) a reaction product (2-3) of DOPO and/or a derivate thereof (2) with the organic compound (3).

Furthermore, a halogen-free, flame retardant (23*), a process to make the foamed polymer (1*) as well as the use of the halogen-free foamed thermoplastic polymer (1*) and the use of the halogen-free, flame retardant (23*) is claimed.

## Description

The present invention relates to a halogen-free, flame-retardant foamed thermoplastic polymer, a process to make the halogen-free foamed thermoplastic polymer and the use of the halogen-free foamed thermoplastic polymer.

Foamed thermoplastic polymers are widely used in many different applications such as building and construction, automotive, packaging, electrical industry as well as aviation and aerospace. They are of light weight and exhibit superior thermal insulation and damping properties as well as high impact resistance.

In order to ensure a certain flame resistance, foamed thermoplastic polymers must contain flame retardants. In order to furnish said foamed polymers with anti-flame properties, flame retardants may be added onto the surface of the foamed polymer articles. Alternatively, or in addition, flame retardants are added before or during the foaming process to result in a mass flame retardancy of the whole foamed polymer. One of the advantages of the latter procedure is that the foamed polymer maintains its flame retardancy, even when the surface of the flame-retardant foamed polymer is scratched or cut away. However, when a flame retardant takes part in the foaming process, it is essential that the finely balanced foam structure is maintained.

A widely used class of flame retardants with good flame-retarding properties are halogenated compounds, such as halogenated phosphates. However, due to their toxicity, e.g. in case of a fire, it has been attempted to exchange the halogenated flame retardants in whole or in part with non-halogenated compounds, such as non-halogenated phosphates or phosphonates.

WO-A-2006/027241 discloses halogen-free flame retardant polymer foams, in particular polystyrene particulate foams in the form of expanded polystyrene (EPS) or extruded polystyrene foam sheets (XPS), containing as flame-retarding phosphorous compound 9,10-Dihydro-9-oxa-10-phospha-phenanthren-10-oxid (DOPO) and derivatives thereof.

While 9,10-Dihydro-9-oxa-10-phosphaphenanthren-10-oxid (DOPO) is known to exhibit good or even excellent flame-retardant properties, own experiments have shown that DOPO - when added in amounts sufficient to furnish the foamed polymers with appropriated fire-retardant properties - has strong negative effects to the polymer foam properties. Hence, DOPO as used today is not a suitable alternative for a halogen-free flame retardant in thermoplastic polymer foams.

Therefore, there is a need for a halogen-free flame retardant with which thermoplastic polymers can be furnished, e.g. before and/or during the foaming process, to result in a good flame retardancy of the foamed polymer. It is, however, mandatory that the optimized foam properties of the foamed thermoplastic polymer are maintained and not or only slightly affected.

Surprisingly, it was found that these requirements can be fulfilled with a halogen-free, flame-retardant foamed thermoplastic polymer (1*) comprising a thermoplastic polymer (1) and a halogen-free flame retardant (23), wherein the flame retardant (23) comprises
i) DOPO and/or a derivate thereof (2) having the general formula (I) 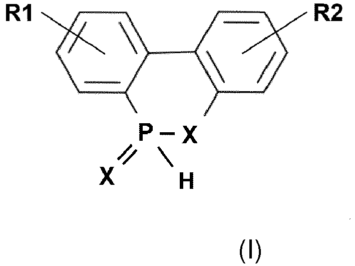
   with X = O or S
   R1 and R2 independent of each other = H, OH and/or unsubstituted or substituted C₁- to C₁₂-alkyl, C₁- to C₁₂-alkenyl, C₃- to C₈-cycloalkyl, C₆- to C₁₄-aryl, C₇- to C₃₀-alkylaryl, wherein one or more C-atoms may be substituted with an O- or N-atom, and/or one or more H-atoms may be substituted with an OH group,
   and
ii) an organic compound (3) comprising one or more reactive groups (3a) and one or more hydrophobic groups (3b), and/or
iii) a reaction product (2-3) of DOPO and/or a derivate thereof (2) with the organic compound (3).

Claimed also is a halogen-free flame retardant (23*) for foamed thermoplastic polymers (1*), wherein the flame retardant (23) comprises
i) DOPO and/or a derivate thereof (2) having the general formula (I) 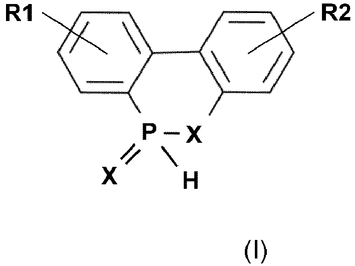
   with X = O or S
   R1 and R2 independent of each other = H, OH and/or unsubstituted or substituted C₁- to C₁₂-alkyl, C₁- to C₁₂-alkenyl, C₃- to C₈-cycloalkyl, C₆- to C₁₄-aryl, C₇-to C₃₀-alkylaryl, wherein one or more C-atoms may be substituted with an O- or N-atom, and/or one or more H-atoms may be substituted with an OH group,
   and
ii) the organic compound (3) comprising one or more reactive groups (3a) and one or more hydrophobic groups (3b), and/or
iii) the reaction product (2-3) of DOPO and/or a derivate thereof (2) with the organic compound (3).

Additionally, claimed also is a process to make the halogen-free foamed thermoplastic polymer (1*) according to the invention, wherein the non-foamed thermoplastic polymer (1) and at least one blowing agent (6) are added to an extruder to undergo an extrusion process, wherein when the flame retardant (23, 23*) comprises
- DOPO and/or a derivate thereof (2) and the organic compound (3), and/or the reaction product (2-3), the flame retardant (23, 23*) is added to the thermoplastic polymer (1) before, during or after the extrusion process, or
- DOPO and/or a derivate thereof (2) and the organic compound (3), either DOPO and/or a derivate thereof (2) or the organic compound (3) is added before and the other component during the extrusion process.

Furthermore, claimed also is the use of the halogen-free foamed thermoplastic polymer (1*) according to the invention for thermal and/or acoustic insulation, in particular for thermal and/or acoustic insulation panels; as packaging material, and/or as damping material.

Claimed is also the use of the halogen-free flame retardant (23*) according to the invention in foamed thermoplastic polymer (1*) to provide flame retardancy and/or dimensional stability to the foamed polymer (1*) and thus to render the foamed thermoplastic polymer (1*) flame-retardant, dimension stable and halogen-free.

It was highly astonishing that the halogen-free flame-retardant foamed thermoplastic polymer (1*) according to the invention could be obtained, wherein the foam properties, such as thermal conductivity, specific heat capacity, water vapor diffusion resistance coefficient, water uptake by diffusion, and compression strength, are maintained or about maintained, and, most importantly, the ignitability test according to EN ISO 11925-2 can be passed. Hence, no toxic and corrosive gases such as HCI or HBr evolve in case of a fire and no volatile halogen compounds are generated upon disposal of polymer foam waste, e.g. when a building or a car, furnished with the foamed polymer (1*), is renovated or demolished. Therefore, no pollution of the environment occurs in case of an unwanted or wanted fire, e.g. during waste incineration. Thus, the foamed thermoplastic polymer (1*) is also furnished with good dimensional stability, in particular good dimensional stability according to DIN EN 13164.

Furthermore, it was unexpected that the process according to the invention results in basically the same or even the same demanding polymer foam properties without overnucleation of the polymer foam during the foaming process, but to result in the halogen-free foamed thermoplastic polymer (1*). Additionally, the skilled person in the art could not foresee that the process parameter of the foaming step or steps can be maintained, while the same foam properties are achieved. Thus, the manufacture of the halogen-free, flame-retardant foamed thermoplastic polymer (1*) may require the similar process parameters as when a traditional, halogen-containing flame-retardant foamed thermoplastic polymer is produced.

Additionally, due to the unexpected same or basically the same polymer foam properties, halogen-free foamed thermoplastic polymer (1*) are obtained which can be used in the same way as the today's halogen-containing foamed thermoplastic polymers, including the same fire classification. In other words: the today's halogen-containing, flame-retardant foamed polymers can be exchanged by the halogen-free, flame-retardant foamed polymer (1*) according to the invention, without having a need for any - or at least not a significant - adjustment of the process parameters. Thus, articles equipped with the halogen-free flame-retardant foamed thermoplastic polymer (1*) are environmentally friendly. And in case of a local fire, e.g. smoldering fire, the adjacent surrounding is not negatively affected by toxic and corrosive gases which may have even a bigger negative impact - e.g. to metal construction and/or electrical installations such as cables and computers - then the fire itself.

Additionally, it was a surprise that the halogen-free flame retardant (23*) according to the invention provides to the foamed polymer (1*) not only sufficient flame retardancy to pass the ignitability test according to EN IS 11925-2, but furnishes the foamed, i.e. expanded, thermoplastic polymer (1*) also with good foam properties. Hence, the flame retardant (23*) is an excellent halogen-free flame retardant to render the foamed thermoplastic polymer (1*) not only halogen-free, but also flame-retardant as well as dimension stable, i.e. having good and stable foam properties.

Furthermore, the halogen-free flame retardant (23*) can be made surprisingly in a large variety of different compositions and thus it can be optimized to the specific chemical nature of the thermoplastic polymer (1) and thus to the foamed thermoplastic polymer (1*).

### The halogen-free, flame-retardant foamed thermoplastic polymer (1*)

The foamed polymer (1*) according to the invention is comprising a thermoplastic polymer (1) and a halogen-free flame retardant (23, 23*). The physical and chemical material properties, including the foam structure - but not the fire-retarding properties, of the foamed thermoplastic polymer (1*) are typically dictated by the foamed thermoplastic polymer (1), and the flame retardant (23, 23*) provides the resistance of the foamed thermoplastic polymer (1*) to flames and thus to fire.

Hence, the foamed polymer (1*) may be obtained by an extrusion process, i.e. to result in an extruded polymer (1*), or by an expansion process, i.e. to result in an expanded polymer (1*). It may comprise open or closed cells. Cell sizes, i.e. cell diameters, may be up to 500 µm or higher, preferably up to 300 µm. The skilled person knows the appropriate method to determine the cell size of the specific foam. A suitable method for determining e.g. open cell content of rigid cellular plastics is ASTM D3576-15. The polymer (1*) may have different densities, e.g. between 15 kg/m³ to 100 kg/m³, in particular between 25 kg/m³ to 50 kg/m³, measured according to SN EN 13164 / SIA 279.164. Thus, the term foamed polymer stands for a polymer foam having a density of at least 5 times lower, preferably at least 10 times lower, than the polymer with its ingredients without the foam.

The halogen-free, flame-retardant foamed thermoplastic polymer (1*) is typically a homogeneous foamed polymer article, e.g. in the form of boards, sheets, slabs, panels, pads, shaped molds, and/or loose fill particles such as foamed or pre-foamed EPS pearls. Hence, EPS pearls, which are partially of fully foamed polystyrene granules which may comprise blowing agent (6), e.g. pentane, are also considered to be a foamed polymer (1*) according to the invention, since they have undergone a - at least first - foaming step. Thus, the flame retardant (23) is added when making the foamed polymer (1*). Alternatively, the halogen-free, flame-retardant foamed thermoplastic polymer (1*) may be a surface-treated foamed polymer (1*), where the flame retardant (23, 23*), e.g. with the reaction product (2-3) of DOPO and/or a derivate thereof (2) with the organic compound (3), may be sprayed onto the surface of the foamed polymer (1) or applied by lamination to obtain a layered foamed polymer (1*), e.g. in the form of boards, sheets, slabs, panels, pads.

The term halogen-free means, according to the present invention, that the halogen-free, flame-retardant foamed thermoplastic polymer (1*), i.e. the foamed polymer (1*) or polymer (1*), comprises only halogen-free raw materials, i.e. the raw materials themselves do not comprise chemically bonded halogens.

The term flame-retardant stands for a retarding effect of the fire to the foamed thermoplastic polymer (1*), e.g. when the polymer (1*) is subjected to direct impingement of a flame. Thus, the foamed polymer (1*) with its huge surface does not burn immediately upon contact with fire, but the start of a fire is retarded and the fire is reduced when compared with the same foamed polymer (1*) without the flame retardant (23, 23*). Furthermore, if the amount of flame retardant (23, 23*) is added in sufficient amount, it is even possible to pass ignitability tests, e.g. EN ISO 11925-2:2010.

The term dimensional stability stands for no or only a minor change of dimensions over a defined period of time at a specific temperature and relative humidity. It is preferably determined according to DIN EN 13164:2015-04 for 48 hrs. @ 70°C and 90% relative humidity (DS(70,90).

Hence, a foamed polymer (1*) with good dimension stability meets these requirements, independent on the specific type of polymer (1).

The term thermoplastic polymer is well known to the skilled person in the art and it relates to polymers which can be deformed reversibly within a polymer-specific temperature range. The polymer can even be heated up to its melting range, which allows to weld the polymer. The glass transition temperature of thermoplastic polymers may be below or above room temperature.

In one preferred embodiment, the thermoplastic polymer (1) is based on polystyrene or a copolymer thereof; polyolefin or a copolymer thereof, in particular polyethylene, polypropylene, ethylene-propylene copolymer; and/or polyethylene terephthalate (PET) or a copolymer thereof, wherein the term copolymer includes block-polymers, block-(co)polymers as well as graft-polymers. Suitable polymers (1) are known to the skilled person in the art.

The term polystyrene includes general-purpose polystyrene (GPPS) as well as recycled polystyrene. GPPS may be of various molecular structures, i.e. it may be of e.g. different molecular weight (MW, MWₙ, MW_{w}) and/or melt volume-flow rate (MVR), also known under the terms melt volume rate and melt volume index. The MVR, measured according to ISO 1133, may vary from e.g. 1 to 40 cm³/10 min; preferably from e.g. 2 to 30 cm³/10 min. Thus, one or more different polystyrene may be used.

Suitable polystyrene copolymers include styrene-acrylonitrile (SAN) and styrene-butadiene (SBR) copolymers, as well as High Impact Polystyrene (HIPS), which is comprising about 4 to 12 wt.% of a polybutadiene rubber, i.e. a (co)polymer of Butadiene, such as 1,3-Butadiene.

The flame retardant (23, 23*) of foamed thermoplastic polymer (1*) according to the invention comprises
i) DOPO and/or a derivate thereof (2), and
ii) an organic compound (3) comprising one or more reactive groups (3a) and one or more hydrophobic groups (3b), and/or
iii) a reaction product (2-3) of DOPO and/or a derivate thereof (2) with the organic compound (3).

Thus, the flame retardant (23, 23*) may comprise i) DOPO and/or a derivate thereof (2), and ii) an organic compound (3) comprising one or more reactive groups (3a) and one or more hydrophobic groups (3b), wherein the components (2) and (3) have reacted with each other. Alternatively, the components (2) and (3) react with each other - e.g. *in-situ* during the foaming process and/or upon making a masterbatch comprising the components (2) and (3), i.e. most typically during an extrusion process - to form the reaction product (2-3) of components (2) and (3), i.e. component iii) of the flame retardant (23, 23*). In many cases, however, the flame retardant (23) of foamed thermoplastic polymer (1*) and the flame retardant (23) according to the invention comprise a mixture of unreacted components (2) and (3), as well as the reaction product (2-3) of the components (2) and (3). As such, the flame retardant (23, 23*) may comprise before the foaming of the thermoplastic polymer (1) primarily of the unreacted components (2) and (3), while the foamed polymer (1*) may well comprise as flame retardant (23, 23*) only or to a large extent the reaction product (2-3) of components (2) and (3).

DOPO and/or a derivate thereof (2), i.e. component i) of the flame retardant (23, 23*), which is believed to be - in reacted and unreacted form - the key component for providing the flame retardant properties to the foamed polymer (1*), comprises a P-H bond and has the general formula (I): 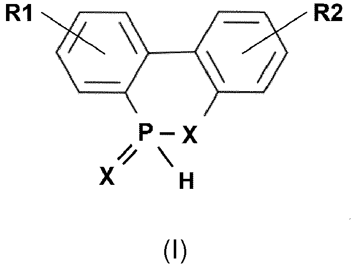
With X = O or S
R1 and R2 independent of each other = H, OH and/or unsubstituted or substituted C₁- to C₁₂-alkyl, C₁- to C₁₂-alkenyl, C₃- to C₈-cycloalkyl, C₆- to C₁₄-aryl, C₇-to C₃₀-alkylaryl, wherein one or more C-atoms may be substituted with an O- or N-atom, and/or one or more H-atoms may be substituted with an OH group.

The organic compound (3), i.e. component ii) of the flame retardant (23, 23*), is comprising one or more reactive groups (3a) and one or more hydrophobic groups (3b). While the reactive groups (3a) are in general due to their chemical nature hydrophilic, and the hydrophobic groups (3b) hydrophobic, the organic compound (3) possesses most typically surface-active properties. As such, the organic compound (3) may act as compatibilizer, i.e. surfactant, between the more hydrophilic DOPO and/or a derivate thereof (2) and the thermoplastic polymer (1), which often exhibits more hydrophobic properties. Due to the one or more reactive groups (3a) of the component (3), it also can be considered to be a reactive surfactant. The reactive groups (3a) of the organic compound (3) are believed to react with component i) of the flame retardant (23, 23*) to the reaction product (2-3).

The organic compound (3) may be of low molecular weight, e.g. 80 to 500, medium molecular weight, e.g. 500 to 20'000, or high molecular weight, e.g. 20'000 to 300'000 or more. Low molecular weight compounds (3) may consist of e.g. one reactive group (3a) and one hydrophobic group (3b), wherein the reactive group (3a) may be located at one end of the hydrophobic group (3b). Medium and high molecular weight compounds (3) may be a copolymer, block-polymer, block-(co)polymer or a graft-polymer, wherein - most typically - one kind of monomer used to form the polymer comprises the reactive groups (3a) and another kind of monomer comprises the hydrophobic groups (3b).

Preferably, the reactive groups (3a) of the compound (3) are selected to react with the component i) of the flame retardant (23, 23*), i.e. with DOPO and/or a derivate thereof (2) to obtain the reaction product (2-3) of DOPO and/or a derivate thereof (2) with the organic compound (3).

In a preferred embodiment, the one or more reactive groups (3a) of the organic compound (3) are selected from the group of amide, amine, aldehyde, anhydride, carbonyl, carboxylate, carboxyl, carboalkoxy, cyanurate, hydroxyl, hydroperoxyl, peroxy, epoxy, ester, hemiacetal, hemiketal, acetal, ketal, orthoester, carboxylic anhydride, carboxamide, ketimine, aldimine, imide, aziridine, azo, cyanate, isocyanate, nitrate, nitrile, isonitrile, nitrosooxy, nitro, nitroso, oxime, carbamate, sulfhydryl, disulfide, sulfinyl, sulfonyl, sulfino, sulfinic acid, sulfonic acid, sulfonate ester, and thiocyanate, wherein amide-, amine-, anhydride-, carboxylate-, carboxyl-, cyanurate-, hydroxyl-, hydroperoxyl-, peroxy-, epoxy-, and/or ester-groups are particularly preferred.

Preferably, the hydrophobic groups (3b) of the compound (3) are selected to be compatible with the thermoplastic polymer (1). Hence, if the polymer (1) is e.g. polystyrene or a copolymer thereof, a preferred hydrophobic group (3b) comprises an aryl-group, i.e. the organic compound (3) may be a polymer comprising polymerized styrene. If the polymer (1) is e.g. a polyolefin or a copolymer thereof, such as polyethylene, polypropylene, ethylene-propylene copolymer, a preferred hydrophobic group (3b) comprises an alkyl-, alkenyl- and/or a cycloalkyl-group, i.e. the organic compound (3) may be a polymer comprising polymerized alkenyl, e.g. octadecene, or acrylate, e.g. butyl acrylate. Alternatively, the hydrophobic groups (3b) may be grafted onto a polymeric backbone. If the polymer (1) is e.g. a polyethylene terephthalate (PET) or a copolymer thereof, a preferred hydrophobic group (3b) comprises an aryl- and/or an ester-group, i.e. the organic compound (3) may be a polymer comprising polymerized styrene and/or methyl methacrylate. In one preferred embodiment, the hydrophobic group (3b) may be the C-C backbone of polymerized monomers comprising a reactive group (3a), such as e.g. the C-C backbone of maleic anhydride homopolymer.

Thus, the one or more hydrophobic groups (3b) of the organic compound (3) are preferably selected from alkane-, cycloalkyl-, alkene-, cycloalkene-, aryl-, and naphthalene group, in particular from C₆- to C₃₀-alkyl, C₆- to C₃₀-alkenyl, C₃- to C₈-cycloalkyl, C₆- to C₁₄-aryl, and C₇- to C₃₀-alkylaryl group.

Hence, in a particularly preferred embodiment, the organic compound (3) comprising one or more reactive groups (3a) and one or more hydrophobic groups (3b), is a maleic anhydride polymer, copolymer, block-(co)polymer or graft-(co)polymer thereof, in particular a copolymer, block-(co)polymer or graft-(co)polymer of maleic anhydride with styrene, methyl methacrylate and/or butyl acrylate, wherein a highly preferred organic compound (3) is styrene maleic anhydride (SMA), e.g. with molecular weight M_{w} of 500 to 300'000, in particular of 2000 to 150'000, and/or a maleic anhydride content of 1 wt.% to 60 wt.%, in particular of 10 wt.% to 50 wt.%.

The reaction product (2-3) of DOPO and/or a derivate thereof (2) with the organic compound (3), i.e. component iii) of the flame retardant (23, 23*), comprises most typically the one or more hydrophobic group (3b) of the organic compound (3), and one or more reactive groups (3a) which have reacted with DOPO and/or a derivate thereof (2). Furthermore, the reaction product (2-3) may optionally also comprise one or more reactive groups (3a) which have not reacted, and/or which have undergone another reaction, e.g. with the thermoplastic polymer (1) or another ingredient of the foamed polymer (1*).

It is assumed that DOPO and/or a derivate thereof (2) and the organic compound (3) react under temperature, e.g. above 100°C, in particular above 150°C, via homolysis, i.e. cleavage of the P-H bond of DOPO and/or a derivate thereof (3) and of a bond of the reactive group (3a) of the organic compound (3), e.g. an C-O bond of an anhydride, into 2 radicals per bond and recombining the radicals into two new bonds and thus forming the reaction product (2-3), i.e. component iii) of the flame retardant (23, 23*).

Below is a proposed reaction mechanism illustrated to form the reaction product (2-3) with DOPO (2) and styrene maleic anhydride (SMA) as an exemplary component (3):

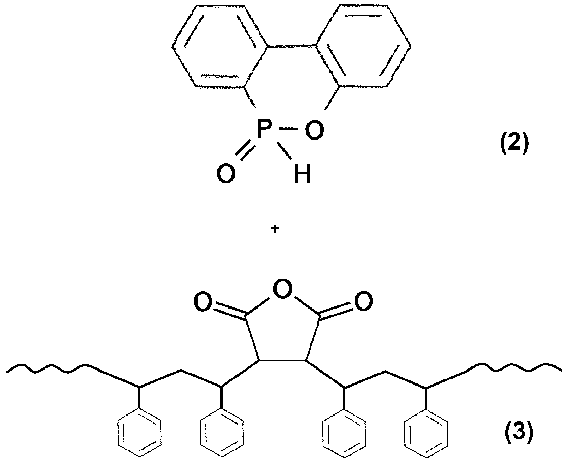

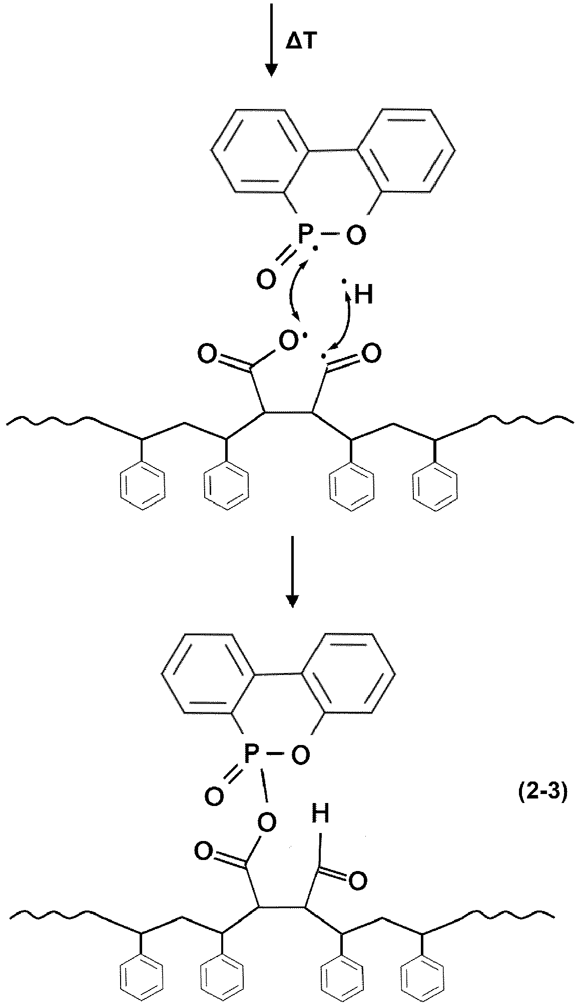

In one preferred embodiment, the flame retardant (23, 23*) comprises
i) a molecular ratio of DOPO and/or a derivate thereof (2) to the reactive groups (3a) of the organic compound (3) of 0.01 to 4, preferably of 0.1 to 2.5, and/or
ii) a ratio of the molecular weights of the sum of reactive groups (3a) to the sum of the hydrophobic groups (3b) of the organic compound (3) of the flame retardant (23, 23*) of 0.1 to 20, preferably of 0.2 to 10,
wherein the molecular ratio and the molecular weights are calculated on the basis of the unreacted components (2) and (3, 3a), respectively. The molecular weights of the hydrophobic groups (3b) are preferably calculated based on the molar ratio of the monomers providing said hydrophobic group (3b). In case of styrene maleic anhydride (SMA) as organic compound (3), said monomer is styrene.

In another preferred embodiment, the foamed thermoplastic polymer (1*) further comprises a synergistic flame retardant (4). The synergistic flame retardant (4) interacts with the flame retardant (23, 23*), in particular with DOPO and/or a derivate thereof (2), and/or the reaction product (2-3) comprising reacted DOPO and/or a derivate thereof (2). Due to said interaction, the amount of flame retardant (23, 23*), in particular components (2) and (2-3), can be reduced while the same flame retarding effect is maintained. The synergistic flame retardant (4) is
- preferably added in an amount of 0.1 to 150 wt.%, in particular 2 to 50 wt.%, most preferably 5 to 25 wt.%, based on the amount of DOPO and/or a derivate thereof (2), and/or
- selected from the group of Dicumene, i.e. 2,3-Dimethyl-2,3-diphenylbutane, organic peroxides, such as Dicumylperoxide, i.e. Bis(1-methyl-1-phenylethyl)peroxide, organophilic layered silicate, Sb₂O₃, Zn-compounds, and/or Pepton 22, i.e. 2,2' dibenzamido diphenyl disulphide.

Suitable synergistic flame retardants (4) are commercially available and known to the skilled person in the art. He is capable to make the best selection, e.g. in type and amount.

In yet another preferred embodiment, the foamed thermoplastic polymer (1*) comprises
- 50 - 99 wt.%, preferably 60 - 97 wt.%, in particular 65 - 96 wt.%, of the thermoplastic polymer (1),
- 1 - 50 wt.%, preferably 3 - 40 wt.%, in particular 4 - 35 wt.%, of the halogen-free flame retardant (23),
- 0 - 30 wt.%, preferably 0.5 - 10 wt.%, in particular 1 - 5 wt.%, of at least one synergistic flame retardant (4), and
- 0 - 20 wt.%, preferably 0 - 15 wt.%, in particular 0 - 10 wt.%, of optional further ingredients (5), such as one or more
   ∘ fine particulate material (51), such as talcum, titanium dioxide, graphite, carbon black, alumina, aluminum, aluminum hydroxide, chalk, silicates, pigments, and/or magnesium oxide; preferably in an amount of up to 20 wt.%, preferably up to 15 wt.%, in particular up to 10 wt.%,
   ∘ further halogen-free flame retardant (52), such as one or more phosphates, phosphites, phosphonates, polyphos-phonate, such as ammonium polyphosphate, melamine, melamine cyanurate, and/or metal oxides, such as aluminum oxide hydrate; preferably in an amount of up to 10 wt.%, preferably up to 8 wt.%, in particular up to 5 wt.%,
   ∘ further additives (53), such as process aids, antioxidants, stabilizing agents such as nitroxyl-radical generating compounds such as TEMPO ((2,2,6,6-Tetramethyl-piperidin-1-yl)oxyl), 4-Hydroxy-TEMPO (1-A1-oxidanyl-2,2,6,6-tetramethylpiperidin-4-ol), absorbers such as UV-, IR- or microwave absorber, and/or light stabilizers such as hindered amine light stabilizers (HAL, HALS, HAS and Flamestab^{®} NOR 116), preferably in an amount of up to 5 wt.%, preferably up to 3 wt.%, in particular up to 1 wt. %,
wherein the added wt.% are all based on the total amount of foamed thermoplastic polymer (1*) comprising all additions, except the blowing agent or agents (6).

The foamed thermoplastic polymer (1*) may also comprise residues of the blowing agent or agents (6) which are added during the process to make the foamed polymer (1*). However, due to the volatility of the blowing agent or agents (6), they will evaporate and diffuse out of polymer (1*), typically within days or weeks. Therefore, when calculating the wt.% of non-volatile ingredients (1) to (5), the added amounts of blowing agent or agents (6) are not considered.

The fine particulate material (51) may have a mean volumetric particle size D₅₀ of e.g. 2 to 200 µm, in particular of 5 to 100 µm, measured by light-scattering according to ISO 13320:2020. The fine particulate material (51) may act as nucleating agent and thus it may play an important role in foam generation when making the foamed thermoplastic polymer (1*). It is, however, possible, that DOPO and/or a derivate thereof (2), i.e. component (2), or another ingredient of the polymer (1*) acts as nucleation agent. The fine particulate material (51) may further act as filler, coloring agent and/or acts as further flame-retardant additive, such as aluminum hydroxide. Suitable fine particulate materials (51) are commercially available and known to the skilled person in the art. He is capable to make the best selection, e.g. in type and amount.

Besides the flame retardant (23), further halogen-free flame retardant (52) may be added. They are commercially available and known to the skilled person in the art. He is capable to make the best selection, e.g. in type and amount.

The halogen-free, flame-retardant foamed thermoplastic polymer (1*) may also comprise one or more further additives (53). They are commercially available and known to the skilled person in the art. He is capable to make the best selection, e.g. in type and amount.

### The flame retardant (23*)

The halogen-free flame retardant (23*) according to the invention is particularly suited as flame retardant for foamed thermoplastic polymers (1*) according to the invention. The flame retardant (23*) comprises
i) DOPO and/or a derivate thereof (2) having the general formula (I) 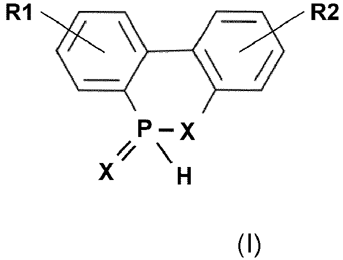
   with X = O or S
   R1 and R2 independent of each other = H, OH and/or unsubstituted or substituted C₁- to C₁₂-alkyl, C₁- to C₁₂-alkenyl, C₃- to C₈-cycloalkyl, C₆- to C₁₄-aryl, C₇- to C₃₀-alkylaryl, wherein one or more C-atoms may be substituted with an O- or N-atom, and/or one or more H-atoms may be substituted with an OH group, and
ii) the organic compound (3) comprising one or more reactive groups (3a) and one or more hydrophobic groups (3b), and/or
iii) the reaction product (2-3) of DOPO and/or a derivate thereof (2) with the organic compound (3).

The flame retardant (23*) may comprise up the 100 wt.%, preferably up to 50 wt.%, based on the total amount of flame retardant (23*), other components. Preferred other components are one or more non-foamed thermoplastic polymer (1), one or more synergistic flame retardant (4), and/or optional further ingredients (5) such as one or more fine particulate material (51), further halogen-free flame retardant (52) and/or further additives (53). It is noted that DOPO and/or a derivate thereof (2), the organic compound (3), the one or more reactive groups (3a) and the one or more hydrophobic groups (3b), as well as the reaction product (2-3) are the same as said components for the flame retardant (23) which is part of the foamed polymer (1*) according to the invention. Furthermore, the optionally added polymer (1), synergistic flame retardant (4), and optional further ingredients (5) such as fine particulate material (51), further halogen-free flame retardant (52) and further additives (53) are also the same as said components for the foamed polymer (1*) according to the invention.

In a preferred embodiment, the flame retardant (23*) comprises
- 35 - 100 wt.%, preferably 50 - 98 wt.%, in particular 65 - 96 wt.%, of the sum of DOPO and/or a derivate thereof (2), the organic compound (3) and/or the reaction product (2-3),
- 0 - 9 wt.%, preferably 0 - 5 wt.%, in particular 0 - 5 wt.%, of at least one thermoplastic polymer (1),
- 0 - 35 wt.%, preferably 2 - 30 wt.%, in particular 2 - 20 wt.%, of at least one synergistic flame retardant (4), and
- 0 - 25 wt.%, preferably 0 - 15 wt.%, in particular 2 - 10 wt.%, of optional further ingredients (5), such as one or more
   ∘ fine particulate material (51), in an amount of up to 10 wt.%, preferably up to 7.5 wt.%, in particular up to 5 wt.%,
   ∘ further halogen-free flame retardant (52), in an amount of up to 10 wt.%, preferably up to 8 wt.%, in particular up to 5 wt.%, and/or
   ∘ further additives (53), in an amount of up to 5 wt.%, preferably up to 3 wt.%, in particular up to 1 wt.%,
wherein the added wt.% are all based on the total amount of foamed thermoplastic polymer (1*) comprising all additions, except the blowing agent or agents (6). The flame retardant (23*) is preferably obtained by extrusion mixing to result in a homogeneous composition which will not demix.

In another preferred embodiment, the flame retardant (23, 23*), or at least a component thereof, is mixed with other components to form a masterbatch (7), wherein the masterbatch (7) preferably comprises
- 10 - 99 wt.%, in particular 60 - 80 wt.%, of thermoplastic polymer (1),
- 1 - 90 wt.%, in particular 15 - 60 wt.%, of flame retardant (23, 23*) or at least one of DOPO and/or a derivate thereof (2), the organic compound (3) and/or the reaction product (2-3),
- 0 - 30 wt.%, preferably 1 - 20 wt.%, of synergistic flame retardant (4), and
- 0 - 30 wt.%, preferably 0 - 10 wt.%, of optional further ingredients (5), in particular one or more fine particulate material (51), further halogen-free flame retardant (52), and/or further additives (53),
wherein the added amounts are all based on the total amount of masterbatch (7) comprising all additions. The masterbatch (7) may be obtained by extrusion mixing or by mixing in a blender. Alternatively, some of the components may be first extrusion-mixed, followed by mixing the remainder in a blender.

### The processes

The Process to make the halogen-free foamed thermoplastic polymer (1*) according to the invention comprises the addition of the non-foamed thermoplastic polymer (1) and at least one blowing agent (6) to an extruder to undergo an extrusion process, wherein when the flame retardant (23, 23*) comprises
- DOPO and/or a derivate thereof (2) and the organic compound (3), and/or the reaction product (2-3), the flame retardant (23, 23*) is added to the thermoplastic polymer (1) before, during or after the extrusion process, or
- DOPO and/or a derivate thereof (2) and the organic compound (3), either DOPO and/or a derivate thereof (2) or the organic compound (3) is added before and the other component during the extrusion process.

In many cases, the flame retardant (23, 23*) is added before and/or during the extrusion process. Thus, the flame retardant (23, 23*) gets homogeneously distributed in the foamed polymer (1*). In one preferred embodiment, the flame retardant (23, 23*) is added as one composition - or as sole reaction product (2-3) - either before or during the extrusion process. In another preferred embodiment and when the flame retardant (23, 23*) comprises DOPO and/or a derivate thereof (2) and the organic compound (3) - preferably with no or only a minor amount of reaction product (2-3) - either DOPO and/or a derivate thereof (2) or the organic compound (3) is added before and the other component during the extrusion process. By doing so, it is often preferred to add the organic component (3) before and DOPO and/or a derivate thereof (2) during the extrusion process. When DOPO and/or a derivate thereof (2) is added during the extrusion process, it is preferably added in its melted stage and thus as a liquid, e.g. heated up to 125°C or above.

However, it is also possible the treat the surface of the foamed polymer (1) after its foaming step with the flame retardant (23, 23*) - e.g. with the reaction product (2-3) of DOPO and/or a derivate thereof (2) with the organic compound (3). If the flame retardant (23, 23*) is at elevated temperature a low viscous fluid, the flame retardant (23, 23*) may be sprayed onto the surface of the foamed polymer (1). Hence, a halogen-free, flame-retardant foamed thermoplastic polymer (1*), in any form, including of boards, sheets, slabs, panels, pads, shaped molds and/or loose fill particles such as foamed or pre-foamed EPS pearls, is thus obtained. If the flame retardant (23, 23*) is at elevated temperature a high viscous fluid, the flame retardant (23) may be itself extruded - e.g. in a tandem extrusion system comprising a twin-screw extruder - to form a thin sheet of foamed or non-foamed flame retardant (23, 23*), which then further is used to laminate the foamed polymer (1) to result in a laminated, e.g. sandwiched, halogen-free, flame-retardant foamed thermoplastic polymer (1*), e.g. in the form of boards, sheets, slabs, panels, pads.

Suitable extruders include single-screw, twin-screw and multi-screw extruders, wherein twin-screw extruders are in many cases the preferred type of extruder. The skilled person in the art is aware of suitable extruders and process parameters for optimal extrusion processes and he can make the best selection of screw elements, designs as well as of the settings. Thus, suitable temperatures may be between 150°C and 220°C, depending on the type of thermoplastic polymer (1), further ingredients such as flame retardant (23, 23*), of synergistic flame retardant (4), optional further ingredients (5) and/or blowing agent (6), as well as the to be achieved foam properties of the foamed thermoplastic polymer (1*).

At least the majority of the non-foamed thermoplastic polymer (1) is added up-front at the feeding zone to the extruder. The at least one blowing agent (6) is in general fed into the extruder after the polymer (1) has melted and the pressure inside the extruder is decreasing. The optional synergistic flame retardant (4) and optional further ingredients (5) are added together with the polymer (1) at the feeding zone and/or at a later stage, e.g. together with the blowing agent or agents (6).

The flame retardant (23, 23*) can be added to the extruder together with the polymer (1) at the feeding zone and/or at a later stage, e.g. together with the blowing agent or agents (6). Furthermore, the flame retardant (23, 23*) can be fed-in in the form of a mixture of DOPO and/or a derivate thereof (2), with the organic compound (3), and/or as reaction product (2-3) of (2) and (3). Alternatively, DOPO and/or a derivate thereof (2), and the organic compound (3), and/or the reaction product (2-3) can be added as separate components at the same or at a different process step. Thus, the organic compound (3) and/or the reaction product (2-3) may be added to the extruder e.g. at the feeding zone together with the thermoplastic polymer (1), and DOPO and/or a derivate thereof (2) may be added at a later stage, i.e. during the extrusion process, e.g. parallel to the addition of the blowing agent or agents (6). Furthermore, the flame retardant (23) or a component thereof, may be added as part of a premix or masterbatch comprising other components.

In one preferred embodiment of the process of the invention, the flame retardant (23, 23*), or at least one of DOPO and/or a derivate thereof (2), the organic compound (3) and/or the reaction product (2-3), is added to the extruder as a masterbatch (7) comprising
- 10 - 99 wt.%, in particular 60 - 80 wt.%, of thermoplastic polymer (1),
- 1 - 90 wt.%, in particular 15 - 60 wt.%, of flame retardant (23, 23*) or at least one of DOPO and/or a derivate thereof (2), the organic compound (3) and/or the reaction product (2-3),
- 0 - 30 wt.%, preferably 1 - 20 wt.%, of synergistic flame retardant (4), and
- 0 - 30 wt.%, preferably 0 - 10 wt.%, of optional further ingredients (5), in particular one or more fine particulate material (51), further halogen-free flame retardant (52), and/or further additives (53),
wherein the added amounts are all based on the total amount of masterbatch (7) comprising all additions and wherein the masterbatch (7) is preferably added up-front, i.e. at the feeding zone, to the extruder.

The term masterbatch is understood to stand for a mixture of the added additives, i.e. the thermoplastic polymer (1), the flame retardant (23, 23*) or the component (2), (3) or (2-3) thereof, the optional synergistic flame retardant (4), and/or one or more optional further ingredients (5), wherein the mixture is either a mechanical mixture without applying elevated temperatures, or a mixture involving elevated temperatures, e.g. extrusion, with melting of at least one of the added additives, e.g. the thermoplastic polymer (1).

When DOPO and/or a derivate thereof (2) and the organic compound (3) are mixt with the thermoplastic polymer (1) to obtain a masterbatch (7) in an extruder, DOPO and/or a derivate thereof (2) and the organic compound (3) may form at least partially the reaction product (2-3).

It is noted that DOPO and/or a derivate thereof (2) and the organic compound (3) may be mixt with each other in an extruder to form at least partially the reaction product (2-3) even without the addition of the thermoplastic polymer (1).

In another preferred embodiment, the at least one blowing agent (6) is added to the extrusion process after the polymer (1) has melted, wherein the optional synergistic flame retardant (4) and further ingredients (5) are added before, during and/or after the extrusion process. The skilled person can well establish at which stage of the extrusion process the polymer has melted. Most often this is the case when the pressure inside the extruder is reduced again, after it has increased at the first stage of the extrusion process upon heating up the fed-in material in the extruder.

Suitable blowing agents (6) are known to the skilled person in the art. Nonlimiting examples include CO2, isobutane, pentane such as n-pentane, ethanol, dimethoxy ethane, dimethyl ether, and/or other low boiling organic agents. It is possible to add one single blowing agent, but it is often preferred to add two or more different blowing agents to optimize the foaming behavior of the final thermoplastic polymer (1*).

The one or more blowing agents (6) are added to the thermoplastic polymer (1) and the flame retardant (23, 23*) preferably in an amount of 0.5 to 10 wt.%, preferably of 1 to 7 wt.%, based on the final extruded polymer foam (1*) without the blowing agents (6). The blowing agent or agents (6) will evaporate and diffuse out of the polymer (1*), typically within days or weeks.

In even another preferred embodiment, the polymer (1), the flame retardant (23, 23*), the blowing agent (6), the optional synergistic flame retardant (4) and optional further ingredients (5) are
i) allowed to expand through a die, in particular a slite die, to form an extruded halogen-free, flame-retardant foamed thermoplastic polymer (1*), or
ii) formed into polymer beads, followed by at least one heat treatment to allow to expand, preferably in a mould, to form an expanded halogen-free, flame-retardant foamed thermoplastic polymer (1*).

When the extruded components are allowed to expand through a die to obtain an extruded polymer (1*), i.e. option i) of said process, the extrusion is preferably carried out e.g. in a tandem extrusion system comprising a twin-screw extruder for melting and mixing the additives and the blowing agent (6), and a single-screw extruder for cooling the obtained halogen-free, flame-retardant foamed thermoplastic polymer (1*). Thus, this is most typically a one-step process, which forms thermoplastic polymers (1*) e.g. in form of boards, sheets, slabs, panels, pads. If the thermoplastic polymer (1) used in this process is e.g. polystyrene, extruded polystyrene (XPS) is thus obtained.

When the extruded components are allowed to form into polymer beads, followed by at least one heat treatment to allow to expand and to form an expanded polymer (1*), i.e. option ii) of said process, the extrusion may be carried out e.g. in a twin-screw extruder for melting and mixing the additives and the blowing agent (6), wherein the extruded products are formed into polymer beads comprising the - or at least a remaining amount of - blowing agent (6). The thus obtained polymer beads are then - e.g. in a mould - allowed to expand due to at least one heat treatment to form an expanded halogen-free, flame-retardant foamed thermoplastic polymer (1*) of any shape. The foamed polymers (1*) may thus be formed into boards, sheets, slabs, panels, pads, shaped molds, and/or loose fill particles, such as foamed or pre-foamed EPS pearls. Thus, this is a two-step or a three-step process. If the polymer (1) is polystyrene, expanded polystyrene (EPS), i.e. foamed polymer (1*), is thus obtained, e.g. by a first heat treatment of the polymer beads with water vapor, followed by cooling and conditioning step and a second heat treatment, e.g. at 130°C.

The flame-retardant (23*) according to the invention may be made by mixing, i.e. blending, component i), i.e. DOPO and/or a derivate thereof (2), with component ii), i.e. the organic compound (3), and optionally with further ingredients, in a mixer such as a powder mixer, e.g. at ambient or slightly elevated temperature, without melting any of the added components.

In many cases, however, it is preferred to mix component i), i.e. DOPO and/or a derivate thereof (2), with component ii), i.e. the organic compound (3), and optionally further ingredients, at elevated temperature, and thus at molten state, wherein extrusion is particularly preferred. Thus, extrusion may be carried out in a single-screw or double-screw extruder, preferably at 125°C or above, in particular at 150°C or above.

### The uses

The halogen-free fire-retardant foamed thermoplastic polymer (1*) according to the invention can be used in a wide variety of different applications, including the same applications as the corresponding foamed thermoplastic polymers comprising a halogenated fire-retardant.

The halogen-free fire-retardant foamed thermoplastic polymer (1*) is, however, preferably used for thermal and/or acoustic insulation, in particular for thermal and/or acoustic insulation panels, e.g. in building industry; as packaging material, and/or as damping material.

In a preferred embodiment, the foamed thermoplastic polymer (1*) is used in building, automotive, aviation, packaging, electronic and/or electrical industry.

The halogen-free fire-retardant foamed thermoplastic polymer (1*) can be used in any suitable form, such as shaped articles, boards, sheets, slabs, panels, pads, shaped molds, and/or loose fill particles such as foamed or pre-foamed EPS pearls.

The halogen-free flame retardant (23*) according to the invention is preferably used in foamed thermoplastic polymers (1*) according to the invention to provide flame retardancy and/or dimensional stability to the foamed polymer (1*) and thus to render the foamed thermoplastic polymer (1*) flame-retardant, dimension stable and halogen-free.

### Examples

A number of examples were carried out in a pilot-scale XPS Tandem extruder comprising a twin-screw extruder for melting and mixing the additives, i.e. the solid raw materials, and the blowing agent (6), and a single-screw extruder for cooling the obtained foamed thermoplastic polymer (1*). For all experiments, polystyrene was used as thermoplastic polymer (1) to obtain extruded and foamed polystyrene panels at various formulations (see Table 1). The obtained panels were then analyzed for their XPS-board properties as well as passing the ignitability test according to EN ISO 11925-2 (see Table 2).

The solid raw materials, i.e. polystyrene as preferred thermoplastic polymer (1), talcum as nucleating agent as fine particulate material (51), i.e. an optional further ingredient (5), Dicumene as synergistic flame retardant (4), DOPO (2) as component i) of the fire retardant (23), styrene maleic anhydride (SMA) as organic compound (3), i.e. as component ii) of the fire retardant (23), as well as CEPPA (3-Hydroxyphenylphosphinyl-propanoic acid) as reference fire retardant and a styrene methyl methacrylate (St/MMA) copolymer as reference organic compound, were added up-front at the feeding zone to the extruder. Some of the raw materials were added as premix or in the form of a masterbatch (see Table 1 for details).

As blowing agents (6) was a mixture or CO₂, dimethyl ether and ethanol added to the extrusion process after the solid raw materials, including the polymer (1), have melted.

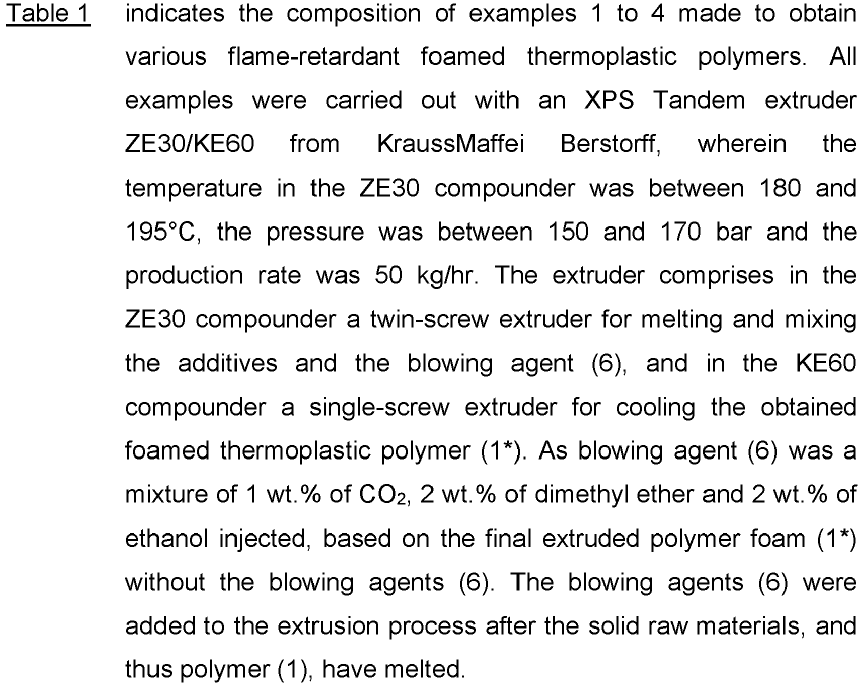

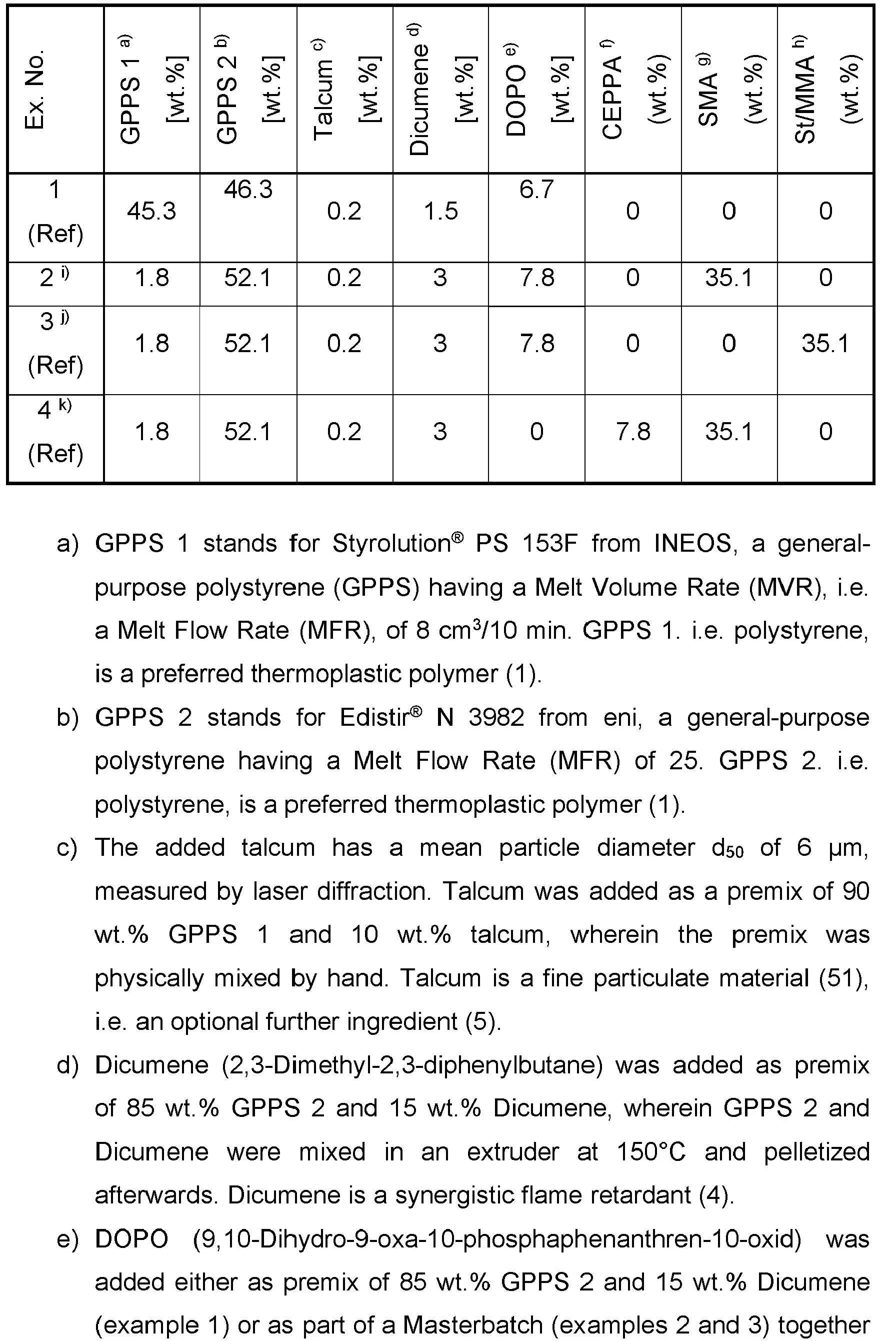

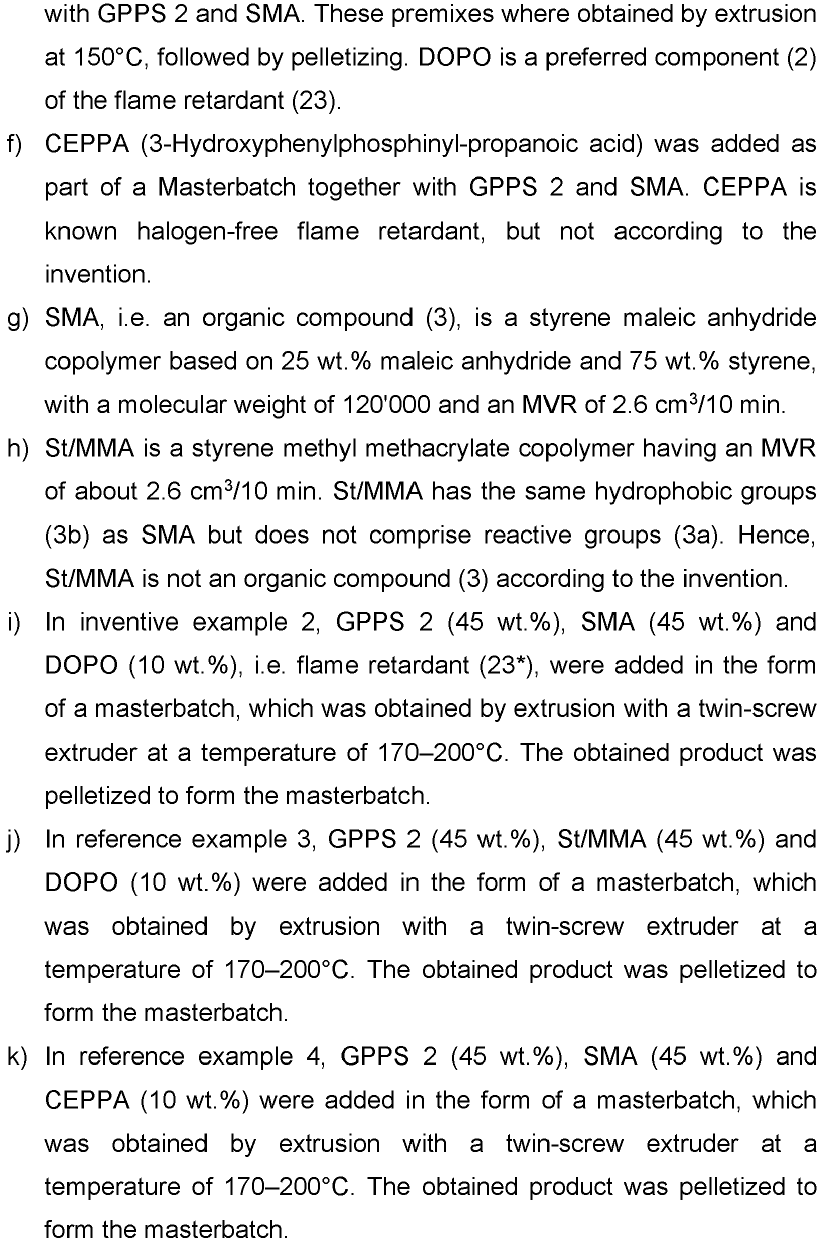

While reference example 1 comprises a significant amount (45.3 wt.%) of general-purpose polystyrene having a low Melt Volume Rate (MVR), i.e. GPPS 1, the examples 2 to 4 comprise only a minor amount of GPPS 1. However, examples 2 and 4 comprise styrene maleic anhydride copolymer (SMA) having a low Melt Volume Rate (MVR) in the range of the MVR of GPPS 1. The same applies with example 3, which comprises a styrene methacrylate copolymer having a low Melt Volume Rate (MVR) in the range of the MVR of GPPS 1. Therefore, all examples are based on polymers and copolymers with similar Melt Volume Rates. Thus, they are comparable with each other in terms of obtained XPS boards properties, as own, undisclosed experiments have indicated.

In examples 2 to 4, the SMA and the St/MMA content, respectively, is rather high. However, the larger amount of said polymers comprises polymerized styrene, i.e. the same polymer as GPPS is based on. Furthermore, these high amounts were chosen for experimental purposes only.

In examples 2 to 4, GPPS 2, DOPO and CEPPA, respectively, as well as SMA and St/MMA, respectively, were added in form of a masterbatch, which was obtained by extrusion. Undisclosed examples, however, have shown the same XPS board properties are obtained and the same ignitability test results are achieved when GPPS 2, DOPO, CEPPA, SMA and St/MMA, respectively, are added as separate additives to the extruder. When doing so, it may be advantageous to add DOPO and CEPPA, respectively, and optionally Dicumene to the extruder after GPPS, SMA and St/MMA, respectively, are melted.

**Table 2: Polymer foam properties and results of the ignitability test according to EN ISO 11925-2:2010 of the test samples 1 to 4 of table 1. All samples do not generate polymer drops and the paper does not burn.**

| Ex. No. | Sample No. | Max. height of flame [mm] | Time of highest flame [sec] | Ignitability Test passed? | XPS board properties |
|---|---|---|---|---|---|
| *Requirements of EN ISO 11925-2* | | ≤ *150* | 20 | *pass* | |
| 1 (Ref) | A | 70 | 14 | passed | Bad ^{a)} |
| | B | 80 | 12 | passed | Bad ^{a)} |
| | C | 80 | 22 | passed | Bad ^{a)} |
| 2 | A | 120 | 8 | passed | Good ^{b)} |
| | B | 120 | 5 | passed | Good ^{b)} |
| | C | 135 | 11 | passed | Good ^{b)} |
| 3 (Ref) | A | 150 | 15 | failed | Bad ^{c)} |
| | B | 170 | 18 | failed | Bad ^{c)} |
| | C | 150 | 16 | failed | Bad ^{c)} |
| 4 (Ref) | A | 200 | 14 | failed | Bad ^{c)} |
| | B | 160 | 10 | failed | Bad ^{c)} |
| | C | 170 | 13 | failed | Bad ^{c)} |

| | | | | | |
|---|---|---|---|---|---|
| a) Bad XPS board properties in example 1 due to an overnucleation to result in too much foam. Thus, no stable foamed polymer can be obtained. b) Good XPS board properties in example 2 refer to a good dimensional stability determined according to DIN EN 13164. Thus, the dimensions of the obtained foamed polymer board are sufficiently stable under different conditions, i.e. they are very comparable to commercially available XPS boards with halogenated flame retardants. c) Bad XPS board properties in examples 3 and 4 refer to a bad dimensional stability. Thus, the dimensions of the obtained foamed polymer board are not sufficiently stable under different conditions. | | | | | |

Reference example 1 comprises the known flame retardant DOPO, i.e. component i) of the flame retardant (23), but not the organic compound (3), i.e. component ii), nor the reaction product (2-3), i.e. component iii) of the flame retardant (23). While the ignitability test according to EN ISO 11925-2 was passed, but the XPS board properties failed due to an overnucleation of the foam and thus a too large amount of foam generated - supposedly due to residues of particulate DOPO. It is noted that the lower amount of Dicumene in example 1 - compared to examples 2 to 4 - does not have an effect on foam generation.

Inventive example 2, i.e. a halogen-free, flame-retardant foamed thermoplastic polymer (1*), passed the ignitability test according to EN ISO 11925-2, and provides also good XPS board properties, i.e. it has a good dimensional stability according to DIN EN 13164 of the foamed polymer (1*) comparable to commercially available XPS boards with halogenated flame retardants.

In reference example 3 was the organic compound (3) of example 2 (SMA) exchanged with a similar, styrene-based polymer having no reactive groups (3a), i.e. St/MMA. The obtained XPS Polymer board passed neither the ignitability test according to EN ISO 11925-2, nor gave an appropriate dimensional stability according to DIN EN 13164.

The comparison to example 2 with example 3 shows impressively the effect of the reactive groups (3a) of the SMA copolymer, i.e. the anhydride groups. Although the St/MMA copolymer is of similar nature as the SMA copolymer, and while keeping the remaining composition constant, only example 2 comprising both, DOPO (2) and the organic compound (3), i.e. SMA with the reactive groups (3a), furnish the obtained XPS board with good flame resistance, i.e. a good fire retarding effect, as well as good XPS board properties. As a conclusion thereof, the flame retardant (23, 23*) requires besides DOPO or a derivate thereof (2) also an organic compound (3) comprising reactive groups, e.g. anhydride groups.

In reference example 4, DOPO (2) of example 2 was exchanged with CEPPA, a phosphorous-based flame retardant comprising an aryl group as well as a reactive carboxyl-group. Despite the significant amount of SMA present in both examples, the obtained XPS Polymer board passed neither the ignitability test according to EN ISO 11925-2, nor gave an appropriate dimensional stability, in particular not according to according to DIN EN 13164.

The comparison of example 2 with example 4 shows impressively the synergistic effect, e.g. due to the reaction, of DOPO (2) with the organic compound (3) comprising one or more reactive groups (3a). Thus, the demanding properties of - among others - flame resistance as well as foam generation can be obtained only with the flame retardant (23) according to the invention and the inventive flame retardant (23*), comprising
i) DOPO and/or a derivate thereof (2), and
ii) an organic compound (3) comprising one or more reactive groups (3a) and one or more hydrophobic groups (3b), and/or
iii) a reaction product (2-3) of DOPO and/or a derivate thereof (2) with the organic compound (3).

The following reference signs are used:
- 1*: flame-retardant, foamed thermoplastic polymer (1*)
- 1: non-foamed thermoplastic polymer (1)
- 2: DOPO and/or a derivate thereof (2)
- 3: organic compound (3)
- 3a: reactive groups (3a) of organic compound (3)
- 3b: hydrophobic groups (3b) of organic compound (3)
- 2-3: reaction product of (2) with (3)
- 23: halogen-free flame retardant (23)
- 23*: halogen-free flame retardant (23*) according to the invention
- 4: optional synergistic flame retardant (4)
- 5: optional further ingredients (5)
- 51: fine particulate material (51)
- 52: further halogen-free flame retardant (52)
- 53: further additives (53)
- 6: blowing agent (6)
- 7: masterbatch (7)

## Claims

1. Halogen-free, flame-retardant foamed thermoplastic polymer (1*) comprising a thermoplastic polymer (1) and a halogen-free flame retardant (23), wherein the flame retardant (23) comprises
i) DOPO and/or a derivate thereof (2) having the general formula (I) 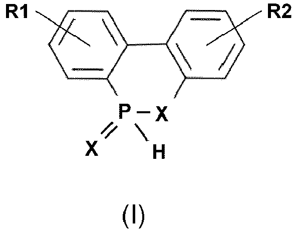
With X = O or S
R1 and R2 independent of each other = H, OH and/or unsubstituted or substituted C₁- to C₁₂-alkyl, C₁- to C₁₂-alkenyl, C₃- to C₈-cycloalkyl, C₆- to C₁₄-aryl, C₇- to C₃₀-alkylaryl, wherein one or more C-atoms may be substituted with an O- or N-atom, and/or one or more H-atoms may be substituted with an OH group,
and
ii) an organic compound (3) comprising one or more reactive groups (3a) and one or more hydrophobic groups (3b), and/or
iii) a reaction product (2-3) of DOPO and/or a derivate thereof (2) with the organic compound (3).

2. Foamed thermoplastic polymer (1*) according to claim 1, **characterized in that** the thermoplastic polymer (1) is based on polystyrene or a copolymer thereof; polyolefin or a copolymer thereof, in particular polyethylene, polypropylene, ethylene-propylene copolymer; and/or polyethylene terephthalate (PET) or a copolymer thereof.

3. Foamed thermoplastic polymer (1*) according to any one of claims 1 to 2, **characterized in that** the one or more reactive groups (3a) of the organic compound (3) are selected from the group of amide, amine, aldehyde, anhydride, carbonyl, carboxylate, carboxyl, carboalkoxy, cyanurate, hydroxyl, hydroperoxyl, peroxy, epoxy, ester, hemiacetal, hemiketal, acetal, ketal, orthoester, carboxylic anhydride, carboxamide, ketimine, aldimine, imide, aziridine, azo, cyanate, isocyanate, nitrate, nitrile, isonitrile, nitrosooxy, nitro, nitroso, oxime, carbamate, sulfhydryl, disulfide, sulfinyl, sulfonyl, sulfino, sulfinic acid, sulfonic acid, sulfonate ester, and thiocyanate.

4. Foamed thermoplastic polymer (1*) according to any one of claims 1 to 3, **characterized in that** the one or more hydrophobic groups (3b) of the organic compound (3) are selected from alkane-, cycloalkyl-, alkene-, cycloalkene-, aryl-, and naphthalene group, in particular from C₆- to C₃₀-alkyl, C₆- to C₃₀-alkenyl, C₃- to C₈-cycloalkyl, C₆- to C₁₄-aryl, and C₇- to C₃₀-alkylaryl group.

5. Foamed thermoplastic polymer (1*) according to any one of claims 1 to 4, **characterized in that** the organic compound (3) is a maleic anhydride polymer, copolymer or graft-(co)polymer thereof, in particular a copolymer or graft-(co)polymer of maleic anhydride with styrene, methyl methacrylate and/or butyl acrylate, wherein the organic compound (3) is in particular styrene maleic anhydride (SMA).

6. Foamed thermoplastic polymer (1*) according to any one of claims 1 to 5, **characterized in that** the flame retardant (23) comprises
i) a molecular ratio of DOPO and/or a derivate thereof (2) to the reactive groups (3a) of the organic compound (3) of 0.01 to 4, preferably of 0.1 to 2.5, and/or
ii) a ratio of the molecular weights of the sum of reactive groups (3a) to the sum of the hydrophobic groups (3b) of the organic compound (3) of the flame retardant (23) of 0.1 to 20, preferably of 0.2 to 10,
wherein the molecular ratio and the molecular weights are calculated on the basis of the unreacted components (2) and (3, 3a), respectively.

7. Foamed thermoplastic polymer (1*) according to any one of claims 1 to 6, **characterized in that** the foamed thermoplastic polymer (1*) further comprises a synergistic flame retardant (4), wherein the synergistic flame retardant (4) is
- preferably added in an amount of 0.1 to 150 wt.%, in particular 2 to 50 wt.%, most preferably 5 to 25 wt.%, based on the amount of DOPO and/or a derivate thereof (2), and/or
- selected from the group of Dicumene, organic peroxides, such as Dicumylperoxide, organophilic layered silicate, Sb₂O₃, Zn-compounds, and/or 2,2' dibenzamido diphenyl disulphide (Pepton 22).

8. Foamed thermoplastic polymer (1*) according to any one of claims 1 to 7, **characterized in that** the foamed thermoplastic polymer (1*) comprises
- 50 - 99 wt.%, preferably 60 - 97 wt.%, in particular 65 - 96 wt.%, of the thermoplastic polymer (1),
- 1 - 50 wt.%, preferably 3 - 40 wt.%, in particular 4 - 35 wt.%, of the halogen-free flame retardant (23),
- 0 - 30 wt.%, preferably 0.5 - 10 wt.%, in particular 1 - 5 wt.%, of at least one synergistic flame retardant (4), and
- 0 - 20 wt.%, preferably 0 - 15 wt.%, in particular 0 - 10 wt.%, of optional further ingredients (5), such as one or more
∘ fine particulate material (51), such as talcum, titanium dioxide, graphite, carbon black, alumina, aluminum, aluminum hydroxide, chalk, silicates, pigments, and/or magnesium oxide; preferably in an amount of up to 20 wt.%, preferably up to 15 wt.%, in particular up to 10 wt.%,
∘ further halogen-free flame retardant (52), such as one or more phosphates, phosphites, phosphonates, polyphosphonates, such as ammonium polyphosphate, melamine, melamine cyanurate, and/or metal oxides, such as aluminum oxide hydrate; preferably in an amount of up to 10 wt.%, preferably up to 8 wt.%, in particular up to 5 wt.%,
∘ further additives (53), such as process aids, antioxidants, stabilizing agents such as nitroxyl-radical generating compounds such as TEMPO ((2,2,6,6-Tetramethylpiperidin-1-yl)oxyl), 4-Hydroxy-TEMPO (1-λ1-oxidanyl-2,2,6,6-tetramethylpiperidin-4-ol), and/or absorber such as IR- or microwave absorber, and/or light stabilizers such as hindered amine light stabilizers (HAL, HALS, HAS and Flamestab^{®} NOR 116), preferably in an amount of up to 5 wt.%, preferably up to 3 wt.%, in particular up to 1 wt.%,
wherein the added wt.% are all based on the total amount of foamed thermoplastic polymer (1*) comprising all additions, except blowing agent or agents (6).

9. Halogen-free flame retardant (23*) for foamed thermoplastic polymers (1*), wherein the flame retardant (23*) comprises
i) DOPO and/or a derivate thereof (2) having the general formula (I) 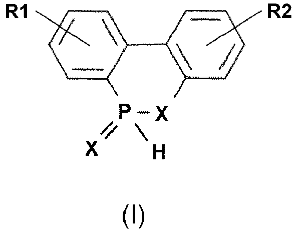
with X = O or S
R1 and R2 independent of each other = H, OH and/or unsubstituted or substituted C₁-to C₁₂-alkyl, C₁- to C₁₂-alkenyl, C₃- to C₈-cycloalkyl, C₆- to C₁₄-aryl, C₇- to C₃₀-alkylaryl, wherein one or more C-atoms may be substituted with an O- or N-atom, and/or one or more H-atoms may be substituted with an OH group,
and
ii) the organic compound (3) comprising one or more reactive groups (3a) and one or more hydrophobic groups (3b), and/or
iii) the reaction product (2-3) of DOPO and/or a derivate thereof (2) with the organic compound (3).

10. Process to make the halogen-free foamed thermoplastic polymer (1*) according to any one of claims 1 to 8, wherein the non-foamed thermoplastic polymer (1) and at least one blowing agent (6) are added to an extruder to undergo an extrusion process, **characterized in that**, when the flame retardant (23, 23*) comprises
- DOPO and/or a derivate thereof (2) and the organic compound (3), and/or the reaction product (2-3), the flame retardant (23, 23*) is added to the thermoplastic polymer (1) before, during or after the extrusion process, or
- DOPO and/or a derivate thereof (2) and the organic compound (3), either DOPO and/or a derivate thereof (2) or the organic compound (3) may be added before and the other component during the extrusion process.

11. Process of claim 10, **characterized in that** the flame retardant (23), or at least one of DOPO and/or a derivate thereof (2), the organic compound (3) and/or the reaction product (2-3), is added to the extruder as a masterbatch (7) comprising
- 10 - 99 wt.%, in particular 60 - 80 wt.%, of thermoplastic polymer (1),
- 1 - 90 wt.%, in particular 15 - 60 wt.%, of flame retardant (23) or at least one of DOPO and/or a derivate thereof (2), the organic compound (3) and/or the reaction product (2-3),
- 0 - 30 wt.%, preferably 1 - 20 wt.%, of synergistic flame retardant (4), and
- 0 - 30 wt.%, preferably 0 - 10 wt.%, of optional further ingredients (5), in particular one or more fine particulate material (51), further halogen-free flame retardant (52), and/or further additives (53),
wherein the added amounts are all based on the total amount of masterbatch (7) comprising all additions and wherein the masterbatch (7) is preferably added in the feeding zone of the extruder.

12. Process of claim 10 or 11, **characterized in that** at least one blowing agent (6) is added to the extrusion process after the polymer (1) has melted, wherein the optional synergistic flame retardant (4) and further ingredients (5) are added before, during and/or after the extrusion process.

13. Process of any one of the claims 10 to 12, **characterized in that** the polymer (1), the flame retardant (23, 23*), the blowing agent (6), the optional synergistic flame retardant (4) and optional further ingredients (5) are
i) allowed to expand through a die, in particular a slite die, to form an extruded halogen-free, flame-retardant foamed thermoplastic polymer (1*), or
ii) formed into polymer beads, followed by at least one heat treatment to allow to expand, preferably in a mould, to form an expanded halogen-free, flame-retardant foamed thermoplastic polymer (1*).

14. Use of the halogen-free foamed thermoplastic polymer (1*) according to any one of the claims 1 to 8 for thermal and/or acoustic insulation, in particular for thermal and/or acoustic insulation panels; as packaging material, and/or as damping material.

15. Use according to claim 14, **characterized in that** the foamed thermoplastic polymer (1*) is used in building, automotive, aviation, packaging, electronic and/or electrical industry.

16. Use of the halogen-free flame retardant (23) according to claim 9 in foamed thermoplastic polymer (1*) to provide flame retardancy and/or dimensional stability to the foamed polymer (1*) and thus to render the foamed thermoplastic polymer (1*) flame-retardant, dimension stable and halogen-free.
